# EUROPÄISCHE PATENTSCHRIFT

(11) **EP 1 020 936 B1**
(45) Veröffentlichungstag und Bekanntmachung des Hinweises auf die Patenterteilung: **25.01.2006**
(21) Anmeldenummer: 00101364.8
(22) Anmeldetag: 29.08.1997
(51) Int. Cl.: H01L 41/09

(54) **Vorrichtung zur Übertragung des Auslenkung eines Aktors**
Control element with a controllable length actuator
Organe de réglage comportant un actionneur à longueur réglable

(30) Priorität: 30.09.1996 DE 19640264
(43) Veröffentlichungstag der Anmeldung: 19.07.2000
(62) Teilanmeldung aus: 97941855.5
(73) Patentinhaber: SIEMENS AKTIENGESELLSCHAFT, 80333 München (DE)
(72) Erfinder: Klügl, Wendelin, 92358 Seubersdorf (DE); Fitzner, Johannes, 08060 Zwickau (DE); Giavi, Raimondo, 80802 München (DE); Kirchweger, Karl, 4431 Haidershofen (AT); Rink, Jürgen, 92442 Wackersdorf (DE); Schmutzler, Gerd, 93138 Kareth (DE); Lehmann, Stefan, 93053 Regensburg (DE); Baranowski, Dirk Dr., 93059 Regensburg (DE); Lewentz, Günter, 93055 Regensburg (DE); Krüger, Hinrich Dr., 93049 Regensburg (DE)

(56) Entgegenhaltungen:
- EP-A- 0 535 510
- DE-A- 3 713 697
- DE-C- 4 407 962

## Beschreibung

Die Erfindung betrifft eine Vorrichtung zur Übertragung der Auslenkung eines Aktors.

Ein hydraulisches Ventil mit einer Vorrichtung zur Übertragung der Auslenkung eines piezoelektrischen Aktors wird in der Kraftfahrzeugtechnik z.B. zum Öffnen eines Einspritzventiles einer Brennkraftmaschine verwendet, wobei die Längsbewegung des piezoelektrischen Aktors über eine entsprechende Anordnung auf ein zugeordnetes Ventilschließglied übertragen wird, das die Rückseite einer druckbelasteten Düsennadel entlastet und so ein gezieltes Öffnen bzw. Schließen der Einspritzdüse ermöglicht.

Aus GB 21 93 386 A ist ein piezoelektrischer Aktor bekannt, der an einer Membran anliegt, die mit Teilen eines Ventilgehäuses und einem in einer Führungsbohrung beweglich angeordneten Stößel eine Druckkammer begrenzt, die mit Hydraulikflüssigkeit gefüllt ist. Durch die Membran ist der piezoelektrische Aktor vor einer Benetzung mit der Hydraulikflüssigkeit geschützt. Die Membran ist im wesentlichen senkrecht zur Auslenkungsrichtung des piezoelektrischen Aktors angeordnet und seitlich im Ventilgehäuse befestigt.

Eine weitere Ausführung schützt auch den Stößel vor einem Benetzen mit der Hydraulikflüssigkeit. Dabei wird die Druckkammer durch einen ersten Faltenbalg begrenzt, der einen plattenförmigen Teil aufweist, an dem der piezoelektrische Aktor anliegt, und der im wesentlichen senkrecht zur Bewegungsrichtung des piezoelektrischen Aktors verläuft und mit dem Ventilgehäuse dicht verbunden ist. Weiterhin ist der in einer Führungsbohrung beweglich angeordnete Stößel ebenfalls über einen zweiten Faltenbalg, der senkrecht zur Bewegungsrichtung des Stößels innerhalb der Führungsbohrung angeordnet ist, mit dem Ventilgehäuse derart verbunden, daß der erste Faltenbalg und der zweite Faltenbalg eine Druckkammer gefüllt mit Hydraulikflüssigkeit bilden, wobei der piezoelektrische Aktor und der Stößel vor einer Benetzung mit der Hydraulikflüssigkeit geschützt sind.

Die Aufgabe der Erfindung besteht darin, die Auslenkung eines Aktors auf einen Stößel zu übertragen, wobei der Stößel und der Aktor vor einer Benetzung mit einer Arbeitsflüssigkeit geschützt sind und eine definierte Bewegung des Stößels in der Führungsbohrung gewährleistet ist.

Die Aufgabe der Erfindung wird durch die Merkmale des Anspruchs 1 gelöst.

Ein wesentlicher Vorteil der Erfindung beruht darin, daß der Stößel in der Führungsbohrung in seiner Bewegung nicht von einem Faltenbalg behindert wird, so daß der Stößel auf die Dimension der Führungsbohrung präzise abstimmbar ist und dadurch Verkantungen beim Bewegen des Stößels sicher vermieden werden.

Weiterhin ist es von Vorteil, eine kompakte Übertragungsvorrichtung vorzusehen, die getrennt von einem Gehäuse fertigbar ist und die auf einfache Weise im Gehäuse montierbar ist.

Vorteilhafte Ausbildungen und Verbesserungen der Erfindung sind in den Unteransprüchen angegeben.

Die Erfindung wird anhand der Figuren näher erläutert; es zeigen:
- Figur 1: schematisch einen Teil eines Hydraulikventils,
- Figur 2: eine ausgelenkte erste und zweite Membran,
- Figur 3: einen Teil eines Hydraulikventils mit einer Übertragungsvorrichtung,
- Figur 4: eine erfindungsgemäße Übertragungsvorrichtung,
- Figur 5: eine Druckkammer mit Füllstück,
- Figur 6: zwei gleich große Membrane,
- Figur 7: zwei gegeneinander geneigte Membrane, und
- Figur 8: zwei seitlich versetzte Membrane.

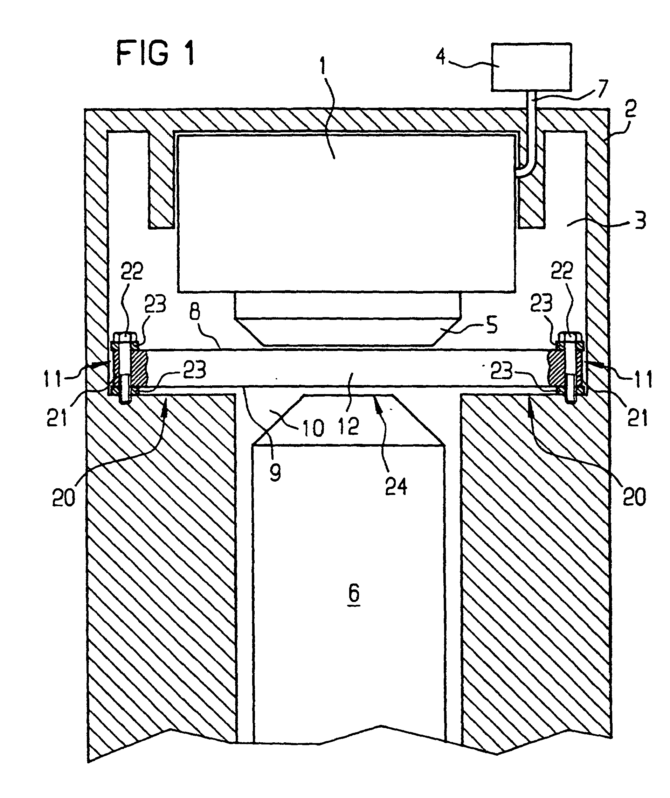

Figur 1 zeigt schematisch einen Teil eines Hydraulikventils, das beispielsweise für die Ansteuerung eines Einspritzventils verwendet wird. In einer Aktorkammer 3 des Ventilgehäuses 2 ist ein Aktor, insbesondere ein piezoelektrischer Aktor 1, vorgesehen, der über Ansteuerleitungen 7 mit einem Ansteuermittel 4 verbunden ist. Der piezoelektrische Aktor 1 weist eine Druckplatte 5 auf, die an einer ersten Membran 8 anliegt, wobei in einem vorgegebenen Abstand zur ersten Membran 8 eine zweite Membran 9 angeordnet ist. Die erste und die zweite Membran 8, 9 sind über Befestigungsmittel 11 im Randbereich dicht abgeschlossen und zugleich auf einer ringförmig umlaufenden Lagerkante 20 fest mit dem Ventilgehäuse 2 verbunden. Die erste und die zweite Membran 8, 9 begrenzen eine Druckkammer 12, die mit einem flüssigen oder pastösem Arbeitsmedium gefüllt ist, das vorzugsweise unter einem vorgegebenen Druck steht. Die erste und die zweite Membran 8, 9 sind beispielsweise als kreisförmige Federstahlplatten ausgebildet, wobei die erste Membran 8 vorzugsweise eine größere Federsteifigkeit als die zweite Membran 9 aufweist.

Im Randbereich der ersten und zweiten Membran 8, 9 ist zwischen der ersten und zweiten Membran 8, 9 umlaufend ein Abstandsring 21 vorgesehen, der den Abstand zwischen der ersten und zweiten Membran 8, 9 vorgibt. Die erste und zweite Membran 8, 9 sind über Schrauben 22 und über ringförmige Abdeck platten 23 dicht an den Abstandsring 21 gepreßt, so daß die Druckkammer 12 dicht abgeschlossen ist.

Die dichte Verbindung zwischen der ersten und der zweiten Membran 8,9 bzw. die feste Verbindung zwischen der ersten und der zweiten Membran und dem Ventilgehäuse 2 kann beispielsweise als Schraub-, Klemm- oder Schweiß-Konstruktion ausgeführt sein.

Symmetrisch zur Anordnung des piezoelektrischen Aktors 1 ist in das Ventilgehäuse 2 ein Führungskanal 10 eingebracht, der beispielsweise als Führungsbohrung 10 ausgebildet ist. Die Führungsbohrung 10 ist bis zur zweiten Membran 9 geführt und mündet in die Aktorkammer 3. In der Führungsbohrung 10 ist ein in Längsrichtung der Führungsbohrung 10 beweglicher Stößel 6 eingebracht, der mit seiner oberen Druckfläche 24 der zweiten Membran 9 zugeordnet ist, an der zweiten Membran 9 anliegt. Der Stößel 6 stellt ein bewegliches Teil dar, auf das die Bewegung des Aktors 1 übertragen wird. Der Stößel 6 steht in Wirkverbindung mit einem Schließglied, das in Abhängigkeit von der Stellung des Stößels 6 den Rückraum einer Einspritznadel von Druck entlastet und dadurch die Einspritznadel von einem zugeordneten Ventilsitz abgehoben wird und ein Einspritzvorgang beginnt.

Das in der Druckkammer 12 befindliche Arbeitsmedium weist eine möglichst geringe Kompressibilität auf, die beispielsweise von einem entsprechenden Hydrauliköl erfüllt wird. Weiterhin wird ein Arbeitsmedium mit einem großen Wärmeausdehnungskoeffizienten verwendet, um die unterschiedlichen Wärmeausdehnungskoeffizienten des Ventilgehäuses 2 und des Aktors 1 ausgleichen zu können. Die Befüllung der Druckkammer 12 mit einem Arbeitsmedium, das unter einem vorgegebenen Druck steht, bietet den Vorteil, daß Inhomogenitäten im Arbeitsmedium, wie beispielsweise Gasblasen, verhindert werden, so daß eine direkte und verlustfreie Druckübertragung von der Druckplatte 5 zur zweiten Membran 9 gewährleistet ist. Weiterhin bietet ein unter Druck stehendes Arbeitsmedium den Vorteil, die erste Membran 8 in Richtung auf den Aktor 1 vorzuspannen, so daß eine weitere Feder zur Vorspannung des Aktors 1 entfallen kann.

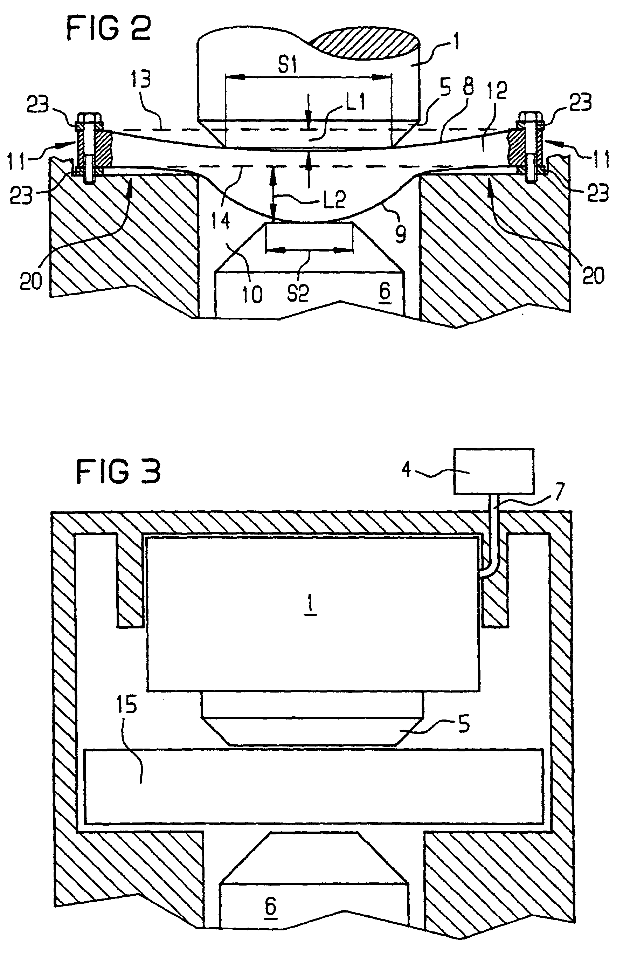

Die Wirkung der Anordnung der Figur 1 wird im folgenden anhand der Figur 2 näher erläutert. Figur 2 zeigt einen um eine erste Strecke L1 in Richtung auf die erste Membran 8 verlängerten piezoelektrischen Aktor 1, der durch seine Auslenkung die erste Membran 8 in Richtung auf den Stößel 6 drückt, so daß die erste Membran 8 in Richtung auf den Stößel 6 durchgebogen ist. In Figur 2 ist die Ausgangslage 13 der ersten Membran 8, die der Position der ersten Membran 8 der Figur 1 entspricht, und die Ausgangslage 14 der zweiten Membran 9, die der Position der zweiten Membran 9 der Figur 1 entspricht, gestrichelt eingezeichnet.

Da die Druckkammer 12 mit einem Arbeitsmedium gefüllt ist, das eine geringe Kompressibilität aufweist, wird durch die Auslenkung der ersten Membran 8 die zweite Membran 9 in Richtung auf den Stößel 6 um eine zweite Strecke L2 ausgelenkt, so daß der Stößel 6 um die zweite Strecke L2 weg vom piezoelektrischen Aktor 1 bewegt wird.

Die zweite Membran 9 kann sich nicht über ihre gesamte Fläche auslenken, da die zweite Membran 9 im Randbereich auf der Auflagekante 20 aufliegt. Die effektive Fläche, über die sich die zweite Membran 9 auslenken kann, wird durch den Querschnitt der Führungsbohrung 10 vorgegeben. Da die Führungsbohrung 10 im Querschnitt kreisförmig ausgebildet ist, wird im folgenden anstelle der effektiven Fläche, über die die zweite Membran 9 auslenkbar ist, der effektive Radius betrachtet, da die effektive Fläche proportional zum effektiven Radius ist. Die Fläche, mit der die zweite Membran 9 ausgelenkt werden kann, ist kleiner als die Fläche, mit der die erste Membran 8 ausgelenkt wird. Deshalb ist die zweite Strecke L2 entsprechend länger als die erste Strecke L1, da das durch die erste Membran 8 verschobene Volumen des Arbeitsmediums durch die Auslenkung der zweiten Membran 9 ausgeglichen wird, wenn das Arbeitsmedium inkompressibel ist.

Das Verhältnis zwischen der ersten Auslenkung L1 und der zweiten Auslenkung L2 ist unter anderem eine Funktion von der auslenkbaren Fläche der ersten Membran 8 und der auslenkbaren Fläche der zweiten Membran 9. Bei dem beschriebenen Ausführungsbeispiel weisen die erste und die zweite Membran 8,9 eine Kreisfläche auf, so daß die auslenkbare Fläche der ersten bzw. der zweiten Membran 8,9 proportional zum effektiven Durchmesser der ersten bzw. der zweiten Membran sind. Damit ist das Verhältnis der ersten Auslenkung L1 zur zweiten Auslenkung L2 proportional zum Verhältnis des zweiten effektiven Durchmessers D2 zum ersten effektiven Durchmesser D1.

In Figur 1 und Figur 2 entspricht der effektive Durchmesser D1 der ersten Membran 8 dem tatsächlichen Durchmesser der ersten Membran 8 und der effektive Durchmesser D2 der zweiten Membran 9 dem Durchmesser der Führungsbohrung 10, der kleiner ist als der tatsächliche Durchmesser D1 der ersten Membran 8. Dadurch, daß der effektive Durchmesser der zweiten Membran 9 kleiner ist als der effektive Durchmesser der ersten Membran 8, wird eine geringe Auslenkung des piezoelektrischen Aktors 1 in eine größere Auslenkung des Stößels 6 umgesetzt.

Weiterhin ist das Verhältnis der ersten zur zweiten Auslenkung eine Funktion von den Durchmessern der Flächen, mit denen die Druckplatte 5 bzw. der Stößels 6 an der ersten bzw. zweiten Membran 8,9 anliegen. Die Druckplatte 5 und der Stößel 6 weisen anliegend an die erste bzw. die zweite Membran jeweils eine kreisförmige Fläche mit einem ersten Durchmesser S1 bzw. einem zweiten Durchmesser S2 auf. Dadurch wird die Biegelinie der ersten bzw. der zweiten Membran 8,9 durch die Druckplatte 5 bzw. den Stößel 6 mindestens teilweise vorgegeben und damit auch die Auslenkung L1, L2 der ersten bzw. der zweiten Membran 8,9 beeinflußt. Das Verhältnis des ersten Durchmessers S1 der Druckplatte 5 zum zweiten Durchmesser S2 des Stößels 6 ist proportional dem Verhältnis der zweiten Auslenkung L2 der zweiten Membran 9 zur ersten Auslenkung L1 der ersten Membran 8.

Die erste und die zweite Membran 8,9 können mindestens teilweise aus einem gewebeverstärkten Kunststoff, vorzugsweise aus Elastomer gefertigt sein.

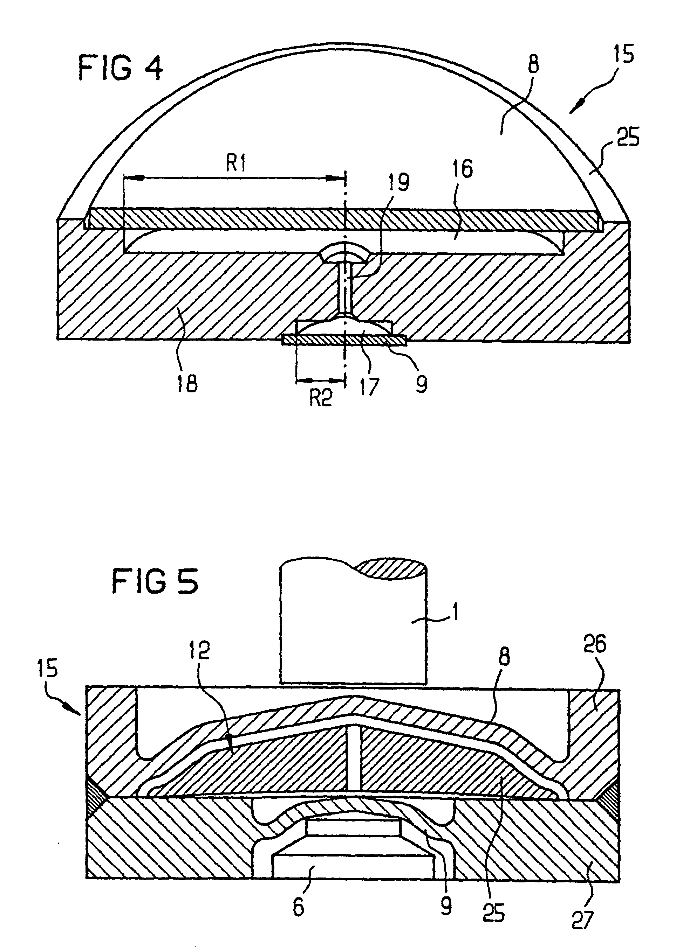

Figur 3 zeigt die Übertragung der Auslenkung des Aktors 1 auf den Stößel 6 in Form einer einstückigen Übertragungsvorrichtung 15, die zwischen der Druckplatte 5 und dem Stößel 6 auf der Auflagekante 20 des Ventilgehäuses 2 aufliegt. Der wesentliche Aufbau der Figur 3 entspricht dem Aufbau der Figur 1, so daß im folgenden anhand der Figur 4 nur die Übertragungsvorrichtung 15 näher beschrieben wird.

Figur 4 zeigt ein Ausführungsbesiepiel eine einstückigen Übertragungsvorrichtung 15 im Querschnitt, die ein scheibenförmiges, aus Metall gefertigtes, Trägerteil 18 aufweist, aus dem von der Oberseite her eine erste, scheibenförmige Ausnehmung 16 herausgearbeitet ist, wobei ein ringförmig umlaufender Steg 25 die erste Ausnehmung 16 seitlich begrenzt. Über der Ausnehmung 16 ist die erste Membran 8 angeordnet, die umlaufend dicht mit dem Steg 25 verbunden ist.

In das Trägerteil 18 ist von der Unterseite her eine zweite Ausnehmung 17 eingebracht, die dicht mit der zweiten Membran 9 abgeschlossen ist. Die zweite Membran 9 ist auf einer ringförmig umlaufenden Fläche dicht mit dem Trägerteil 18 verbunden. Die erste und die zweite Ausnehmung 16, 17 sind über eine in das Trägerteil 118 eingebrachte Verbindungsleitung 19 miteinander verbunden und stellen somit eine abgeschlossene Druckkammer 12 dar.

Die erste und die zweite Membran 8,9 sind vorzugsweise kreisförmig ausgebildet, wobei die Fläche bzw. der Radius R1 der ersten Membran 8 größer als die Fläche bzw. der Radius R2 der zweiten Membran 9 ist. Die Federsteifigkeit der zweiten Membran 9 ist vorzugsweise kleiner als die Federsteifigkeit der ersten Membran 8, damit bei einer zur Verfügung stehenden, begrenzten Kraft des Aktors 1 eine entsprechend große zweite Auslenkung L2 der zweiten Membran 9 erzeugt wird, wenn die erste Membran 8 in Richtung auf die erste Ausnehmung 16 vom piezoelektrischen Aktor 1 ausgelenkt wird.

Das Volumen in der Druckkammer 12 zwischen den beiden Membranen 8, 9 sollte möglichst klein sein, um eine große hydraulische Steifigkeit zu erreichen.

Weiterhin ist es von Vorteil, das Arbeitsmedium in der Druckkammer 12 mit einem vorgegebenen Druck zu versehen, so daß die erste und zweite Membran 8, 9 in Richtung auf den piezoelektrischen Aktor 1 bzw. den Stößel 6 gewölbt ist und damit der Aktor 1 bzw. der Stößel 6 entsprechend vorgespannt sind, so daß keine zusätzlichen Federn zur Vorspannung insbesondere des Aktors 1 notwendig sind.

Die Anordnung der Figur 4 funktioniert entsprechend dem Prinzip der Figur 2. Eine geringe Auslenkung der ersten Membran 8 drückt aufgrund des großen Radius R1 ein großes Volumen an Arbeitsmedium von der ersten Ausnehmung 16 über die Verbindungsleitung 19 in die zweite Ausnehmung 17. Die zweite Membran 9 wird entsprechend weiter ausgelenkt, da der Radius R2 der zweiten Membran 9 kleiner ist als der Radius R1 der ersten Membran 8.

Der Durchmesser der Verbindungsleitung 19 ist vorzugsweise so zu dimensionieren, daß keine beeinträchtigende Drosselwirkung auftritt, wenn das Arbeitsmedium durch die Verbindungsleitung 19 gedrückt wird.

Die Übersetzungsvorrichtung 15 der Figur 4 bietet den besonderen Vorteil, daß nur ein geringer Montageaufwand zur Einbringung in das Ventilgehäuse 2 notwendig ist, da die Übersetzungsvorrichtung 15 bereits fertig vormontiert ist. Weiterhin gibt es aufgrund der erfindungsgemäßen Vorrichtung keine Leckagen, so daß ein maximal möglicher Wirkungsgrad bei der Übersetzung der Auslenkung des piezoelektrischen Aktors 1 auf den Stößel 6 erreicht wird.

Zudem wird aufgrund der besonderen Form der ersten und zweiten Membran 8,9, die im wesentlichen senkrecht zur Auslenkungsrichtung des piezoelektrischen Antriebs 1 angeordnete Platten darstellen, eine hohe hydraulische Steifigkeit erreicht.

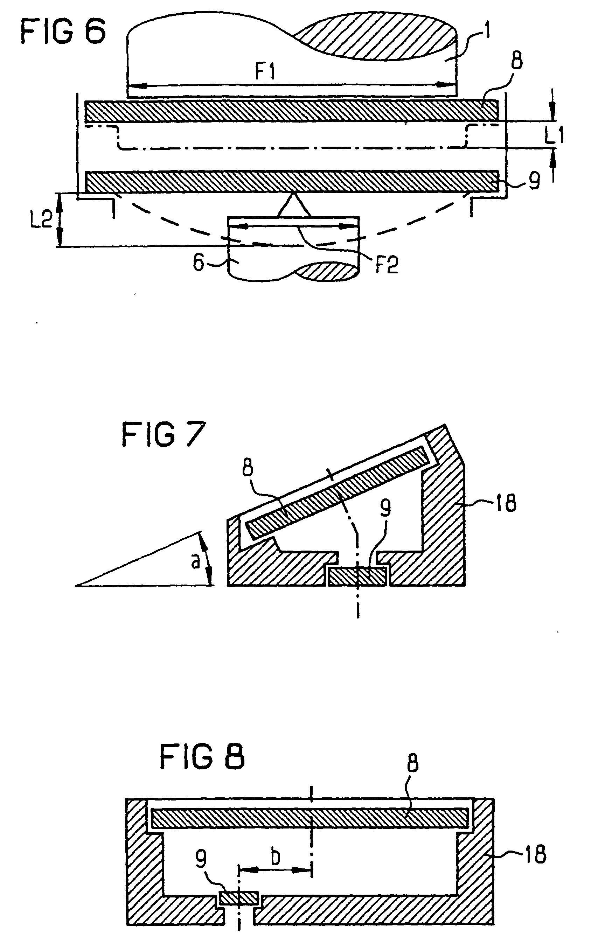

Figur 5 zeigt im Querschnitt den Aufbau einer spannungsoptimierten Übertragungsvorrichtung 15, bei der die erste und die zweite Membran 8,9 in Richtung auf den Aktor 1 gewölbt und dadurch vorgespannt sind. Die erste und die zweite Membran 8,9 weisen jeweils einen umlaufenden, verstärkten Tragring 26, 27 auf, von dem ausgehend die erste bzw. die zweite Membran 8,9 ausgebildet ist, so daß die erste bzw. die zweite Membran 8,9 mit dem entsprechenden Tragring 26,27 als ein einziges Bauteil ausgebildet sind. Durch die entsprechende Breite des Tragringes 26,27 wird der Durchmesser der entsprechenden Membran 8,9 festgelegt. Die Verbindung zwischen der ersten und der zweiten Membran wird dabei zwischen den Tragringen 26,27 hergestellt, die beispielsweise miteinander dicht verschraubt oder verklebt sind. Dadurch ist sichergestellt, daß die Verbindung zwischen der ersten und der zweiten Membran 8,9 außerhalb der Membran 8,9 und außerhalb des Anschlußbereiches, in dem die Membran 8,9 an den Tragring 26,27 anschließt, vorgesehen ist.

In der Druckkammer 12 ist ein Füllstück 25 eingebracht, das der Druckkammer 12 nachgebildet ist und einen Teil der Druckkammer 12 ausfüllt. Die Verbindungsleitung 19 ist ebenfalls im Füllstück 12 eingearbeitet. Das Füllstück 25 ist fest in der Druckkammer 12 angeordnet und teilt die Druckkammer 12 in zwei Kammern auf, wobei eine Kammer mindestens teilweise von der ersten Membran 8 und die zweite Kammer mindestens teilweise von der zweiten Membran 9 begrenzt wird. Das Füllstück 25 ist aus einem inkompressiblen Material, z.B. Metall, gefertigt.

Durch die Einbringung des Füllstückes wird die Geometrie der ersten und der zweiten Membran 8,9 unabhängig von der Anforderung, die Druckkammer 12 so klein wie möglich zu gestalten, damit die Kompressibilität zwischen der ersten und der zweiten Membran 8,9 so klein wie möglich gehalten wird. Auf diese Weise kann die erste und die zweite Membran 8,9 spannungsoptimiert ausgelegt werden. Die Druckkammer 12 wird aus drei getrennt hergestellten Teilen hergestellt, wobei ein erstes Teil die erste Membran 8, ein zweites Teil die zweite Membran 9 und ein drittes Teil das Füllstück 25 aufweist.

Das Füllstück 25 ist so ausgebildet, daß es näherungsweise die Wölbung der ersten und/oder der zweiten Membran 8,9 nachbildet, wobei jedoch ein entsprechender Abstand zwischen dem Füllstück 25 und der ersten bzw. der zweiten Membran vorgesehen ist, daß die Auslenkung der ersten und zweiten Membran 8,9 nicht behindert wird. Die erste Membran 8, die zweite Membran 9 und das Füllstück 25 werden jeweils getrennt hergestellt und anschließend miteinander verbunden.

Ein Verfahren zur Herstellung der Übersetzungsvorrichtung 15 ist das Metallspritzgießen mit einer Mischung aus pulverisiertem Metall und bis zu 50% Kunststoffanteil, mit dem eine Vielzahl von verschiedenen Formen und Geometrien der Übersetzungsvorrichtung 15 herstellbar sind.

Ein Material zur Herstellung der Übersetzungsvorrichtung 15 ist ein faserverstärktes Material, z.B. faserverstärkter Kunststoff, der entsprechend geformt wird.

In Figur 6 ist zu erkennen, daß die erste und die zweite Membran 8,9 gleich groß gewählt sind, aber die Flächen, mit denen der Aktor 1 und der Stößel 6 an der ersten bzw. der zweiten Membran 8,9 anliegen unterschiedlich groß sind, so daß aufgrund der größeren Fläche F1, mit der der Aktor 1 die erste Membran 8 um eine erste Strecke L1 auslenkt, die zweite Membran 9 um eine größere zweite Strecke L2 auslenkt, so daß eine Übersetzung der Auslenkung des Aktors 1 auf den Stößel 6 über die unterschiedlich großen erste und zweite Fläche F1,F2 erreicht wird.

In Figur 7 ist zu erkennen, daß die zweite Membran 9 nicht parallel zur ersten Membran 8 ausgebildet ist, so daß eine Umlenkung der Bewegungsrichtung des Aktors 1 auf eine beliebige Bewegungsrichtung des Stößels 6 möglich ist, obwohl die erste und die zweite Membran 8,9 vorzugsweise plane, plattenförmige Membranen 8,9 darstellen. Die zweite Membran 9 kann in einem beliebigen Winkel a zur ersten Membran 8 ausgerichtet sein.

Figur 8 zeigt, daß die erste und die zweite Membran 8,9 parallel zueinander und seitlich gegeneinander um einen Abstand b versetzt angeordnet sind, so daß die Auslenkungsrichtung des Aktors 1 und die Bewegungsrichtung des Stößels 6 parallel und seitlich versetzt zueinander angeordnet sind.

## Patentansprüche

1. Vorrichtung zur Übertragung einer Auslenkung eines Aktors (1), insbesondere eines piezoelektrischen Aktors,
- mit einem Trägerteil (18), in das von der Oberseite eine erste Ausnehmung (16) eingebracht ist,
- mit einer ersten Membran (8), die mit dem Trägerteil (18) dicht verbunden ist und die erste Ausnehmung (16) dicht abschließt,
- mit einer zweite Ausnehmung (17), die von der Unterseite in das Trägerteil (18) eingebracht ist,
- mit einer zweiten Membran (9), die mit dem Trägerteil (18) dicht verbunden ist und die zweite Ausnehmung (17) dicht abschließt,
- mit einem Verbindungskanal (19), der in das Trägerteil (18) eingebracht ist und die erste Ausnehmung (16) mit der zweiten Ausnehmung (17) verbindet,
- wobei die erste Ausnehmung (16), die zweite Ausnehmung (17) und der Verbindungskanal (19) eine geschlossene Druckkammer (12) bilden, die mit einem Arbeitsmedium gefüllt ist.

2. Vorrichtung nach Anspruch 1,
**dadurch gekennzeichnet,**
- **daß** die Fläche der ersten Membran (8), die die erste Ausnehmung (16) begrenzt, größer ist als die Fläche der zweiten Membran (9), die die zweite Ausnehmung (17) begrenzt.

3. Vorrichtung nach Anspruch 1,
**dadurch gekennzeichnet,**
- **daß** die zweite Membran (9) eine geringere Steifigkeit als die erste Membran (8) aufweist und sich dadurch bei gleichem Druck weiter durchbiegt als die erste Membran (8).

4. Vorrichtung nach Anspruch 1,
**dadurch gekennzeichnet,**
- **daß** das Arbeitsmedium in der Druckkammer (12) einen vorgegebenen Druck aufweist.

5. Vorrichtung nach Anspruch 1, **dadurch gekennzeichnet, daß** die erste oder die zweite Membran (8,9) mindestens teilweise aus gewebeverstärktem Kunststoff, insbesondere Elastomer, aufgebaut ist.

6. Vorrichtung nach Anspruch 1, **dadurch gekennzeichnet, daß** zwischen der ersten und der zweiten Membran (8,9) ein Füllstück (25) vorgesehen ist, das vorzugsweise an die Form der ersten oder zweiten Membran (8,9) angepaßt ist, so daß Druckkammer (12), die von der ersten und der zweiten Membran (8,9) gebildet wird, unabhängig von der Form der ersten und der zweiten Membran (8,9) mit einem kleinen Volumen ausbildbar ist.

7. Vorrichtung nach Anspruch 1, **dadurch gekennzeichnet, daß** zwischen der ersten und der zweiten Membran (8,9) ein Füllstück (25) vorgesehen ist, das vorzugsweise an die Form der ersten oder der zweiten Membran (8,9) angepaßt ist, so daß die Druckkammer (12), die von der ersten und der zweiten Membran (8,9) gebildet wird, unabhängig von der Form der ersten und der zweiten Membran (8,9) mit einem kleinem Volumen ausbildbar ist.

## Revendications

1. Dispositif pour transmettre une déviation d'un actionneur (1), en particulier d'un actionneur piézoélectrique, comprenant
- une partie porteuse (18) dans laquelle un premier évidement (16) est ménagé en partant du côté supérieur,
- une première membrane (8) qui est assemblée à la partie porteuse (18) à joint étanche et qui ferme le premier évidement (16) à joint étanche,
- un deuxième évidement (17) qui est ménagé dans la partie porteuse (18) en partant du côté inférieur,
- une deuxième membrane (9) qui est assemblée à la partie porteuse (18) à joint étanche et qui ferme le deuxième évidement (17) à joint étanche,
- un canal de liaison (19) qui est ménagé dans la partie porteuse (18) et qui relie le premier évidement (16) au deuxième évidement (17),
- le premier évidement (16), le deuxième évidement (17) et le canal de liaison (19) formant une chambre de pression fermée (12) qui est remplie d'un milieu de travail.

2. Dispositif selon la revendication 1,
**caractérisé**
- **en ce que** la surface de la première membrane (8) qui délimite le premier évidement (16) est plus grande que la surface de la deuxième membrane (9) qui délimite le deuxième évidement (17).

3. Dispositif selon la revendication 1,
**caractérisé**
- **en ce que** la deuxième membrane (9) présente une plus faible rigidité que la première membrane (8) et que, de ce fait, à égalité de pression, elle fléchit plus fortement que la première membrane.

4. Dispositif selon la revendication 1,
**caractérisé**
- **en ce que** le milieu de travail présent dans la chambre de pression (12) présente une pression prédéterminée.

5. Dispositif selon la revendication 1, **caractérisé en ce que** la première membrane (8) ou la deuxième membrane (9) est construite au moins partiellement en une matière plastique, en particulier en élastomère, renforcée de tissu.

6. Dispositif selon la revendication 1, **caractérisé en ce qu'**il est prévu entre la première membrane (8) et la deuxième membrane (9) une pièce de remplissage (25) qui est de préférence adaptée à la forme de la première membrane ou de la deuxième membrane (8, 9), de sorte que la chambre de pression (12) qui est formée par les première et deuxième membranes (8, 9) peut être réalisée avec un petit volume, indépendamment de la forme de la première membrane et de la deuxième membrane (8, 9).

7. Dispositif selon la revendication 1, **caractérisé en ce qu'** il est prévu entre la première membrane et la deuxième membrane (8, 9) une pièce de remplissage (25) qui est de préférence adaptée à la forme de la première membrane ou de la deuxième membrane (8, 9), de sorte que la chambre de pression (12) qui est formée par les première membrane et deuxième membrane (8, 9) peut être réalisée avec un petit volume, indépendamment de la forme de la première membrane et de la deuxième membrane (8, 9).

## Claims

1. Device for transmitting a deflection of an actuator (1), in particular a piezoelectric actuator,
- having a carrier part (18) into which a first recess (16) is incorporated from the top,
- having a first diaphragm (8) which is tightly connected to the carrier part (18) and tightly seals the first recess (16),
- having a second recess (17) which is incorporated into the carrier part (18) from the bottom,
- having a second diaphragm (9) which is tightly connected to the carrier part (18) and tightly seals the second recess (17),
- having a connecting channel (19) which is incorporated into the carrier part (18) and connects the first recess (16) to the second recess (17),
- wherein the first recess (16), the second recess (17) and the connecting channel (19) form a closed pressure chamber (12) which is filled with a working medium.

2. Device according to claim 1,
**characterised in that**
- the area of the first diaphragm (8) which delimits the first recess (16) is greater than the area of the second diaphragm (9) which delimits the second recess (17).

3. Device according to claim 1,
**characterised in that**
- the second diaphragm (9) has a lower stiffness than the first diaphragm (8) and consequently deflects further than the first diaphragm (8) when subject to the same pressure.

4. Device according to claim 1,
**characterised in that**
- the working medium in the pressure chamber (12) has a predetermined pressure.

5. Device according to claim 1, **characterised in that** the first or second diaphragm (8, 9) is constructed at least in part from fabric-reinforced plastic, in particular elastomer.

6. Device according to claim 1, **characterised in that** a filler piece (25) is provided between the first and the second diaphragm (8, 9), said filler piece (25) preferably being adapted to the shape of the first or second diaphragm (8, 9) so that the pressure chamber (12) which is formed by the first and the second diaphragm (8, 9) can be embodied with a small volume irrespective of the shape of the first and second diaphragm (8, 9).

7. Device according to claim 1, **characterised in that** a filler piece (25) is provided between the first and the second diaphragm (8, 9), said filler piece (25) preferably being adapted to the shape of the first or second diaphragm (8, 9) so that the pressure chamber (12) which is formed by the first and the second diaphragm (8, 9) can be embodied with a small volume irrespective of the shape of the first and second diaphragm (8, 9).
